# EUROPÄISCHE PATENTANMELDUNG

(11) **EP 0 535 658 A1**
(43) Veröffentlichungstag der Anmeldung: **07.04.1993**
(21) Anmeldenummer: 92116779.7
(22) Anmeldetag: 30.09.1992
(51) Int. Cl.: B01J 19/20, B04B 1/20, B01D 11/02

(54) **Reaktor zur Gegenstrombehandlung von Feststoffen und Flüssigkeiten**

(30) Priorität: 30.09.1991 DE 4132593
(71) Anmelder: LINDE-KCA-Dresden GmbH, D-01067 Dresden (DE)
(72) Erfinder: Roland, Klaus, Dipl.-Ing., 0-8101 Medingen (DE)
(74) Vertreter: Schaefer, Gerhard, Dr.

(57) **Zusammenfassung**

Die Erfindung betrifft einen Reaktor zur Gegenstrombehandlung von Feststoffen und Flüssigkeiten im Zentrifugalkraftfeld, insbesondere für leicht in Flüssigkeiten suspendierende feinzerteilte Feststoffe.

Der Reaktor besteht aus einer rotierenden Trommel 1, in der eine mitrotierende ein- oder mehrgängige Schnecke 4 zum Fördern und zur Bearbeitung der Feststoffe auf der Trommelinnenwand axial angeordnet ist.

Jeder Schneckengang besteht aus zwei hintereinander angeordneten Schraubenblättern unterschiedlichster Konstruktionen. Das erste Schraubenblatt 7 füllt im wesentlichen den gesamten Durchmesser der Trommel 1 aus und weist zahlreiche Unterbrechungen 27 in Form von Lücken oder Schlitzen auf oder ist aus versetzt angeordneten Schraubenblattelementen 28 gebildet.

Das dahinter angeordnete zweite Schraubenblatt 6 weist dagegen einen Abstand zur Trommelinnenwand auf und kann durchgehend ohne Unterbrechungen ausgebildet sein.

Beim Betrieb des Reaktors werden die sedimentierten Feststoffe aufgrund einer Differenzgeschwindigkeit zwischen Trommel 1 und Schnecke 4 transportiert. Dabei werden die Feststoffe von dem ersten Schraubenblatt 7 gesammelt, umgelagert und jeweils bis zu einer Unterbrechung gefördert und von dem zweiten Schraubenblatt 6 die vom ersten Schraubenblatt 7 auf der Trommelinnenwand in Bahnen abgelegten Feststoffe wieder gleichmäßig in Förderrichtung verstrichen.

Auf diese Weise wird die Oberfläche des Feststoffes während des Transportes durch den Reaktor ständig und wiederholend erneuert und dadurch die beabsichtigten Reaktionen, z.B. Stoffaustausch zwischen Flüssigkeit und Feststoff, intensiviert.

Durch Aufgabe der Flüssigkeit 13 auf der der Aufgabe des Feststoffes 12 gegenüberliegenden Seite der Trommel 1 und durch Anordnung eines Wehres 21 für den Flüssigkeitsaustrag 17 und Ausbildung einer Seite der Trommel in konischer Form 3 bis zum Feststoffaustrag 16 wird der Gegenstrom erzielt.

## Beschreibung

Die Erfindung betrifft einen Reaktor zur Gegenstrombehandlung von Feststoffen und Flüssigkeiten im Zentrifugalkraftfeld, insbesondere für leicht in Flüssigkeiten suspendiere feinzerteilte Feststoffe.

Der Reaktor besteht aus einer rotierenden Trommel 1, in der eine mitrotierende ein- oder mehrgängige Schnecke 4 zum Fördern und zur Bearbeitung der Feststoffe auf der Trommelinnenwand axial angeordnet ist.

Aus Ullmann's Encyklopädie der technischen Chemie, 4. Auflage, Band 2, Seite 213-217, sind sogenannte Zentrifugal-Dekanter bekannt, die im wesentlichen aus einer Trommel bestehen, die eine axial angeordnete Förderschnecke enthält. Diese Dekanter dienen vor allem zur Trennung von Feststoffen und Flüssigkeiten in einem durch Rotation erzeugten Zentrifugalkraftfeld. Sie werden z.B. zur Klärung von Suspensionen, zur Eindickung von Schlämmen und zur Stromklassierung von dispergierten Feinkornkollektiven eingesetzt.

Mit der DE-OS 27 01 763 wurde ein kontinuierlich arbeitender Vollmantel-Gegenstrom-Zentrifugalextraktor vorgeschlagen, der eine Weiterentwicklung der bekannten Zentrifugal-Dekanter darstellt. Diese Weiterentwicklung dient nicht mehr der Trennung von Feststoffen und Flüssigkeiten, sondern soll einen Stoffaustausch zwischen zwei Medien, insbesondere einer feststoffhaltigen Flüssigkeit und einem flüssigen Extraktionsmittel, ermöglichen. Dabei werden die beiden Medien im Gegenstrom zueinander geführt.

Zu einer effektiven stofflichen und/oder energetischen Zustandsänderung eines Stoffstromes durch Reaktionen mit einem zweiten Stoffstrom ist bekanntermaßen das Gegenstromprinzip in vielen Fällen unerläßlich. Zwischen Flüssigkeiten und Feststoffen kann jedoch im normalen Erdschwerefeld das stufenlose Gegenstromprinzip dann nicht oder nur schwierig verwirklicht werden, wenn es sich bei dem Feststoff um leicht in der Flüssigkeit suspendierende feinzerteilte Teilchen handelt.

Eine Möglichkeit besteht darin, beide Phasen einer mehr oder weniger großen Zentrifugalkraft in einer rotierenden Trommel zu unterwerfen, so daß der Feststoff im sedimentierten Zustand gehalten wird und mit einer Schneckenförderung im Gegenstrom zur Flüssigkeit transportiert werden kann.

Hierbei werden jedoch nachteilig die Berührungsflächen zwischen Flüssigkeit und den Feststoffen stark reduziert.

Der vorliegenden Erfindung liegt deshalb die Aufgabe zugrunde, einen Reaktor der eingangs genannten Art so auszugestalten, daß eine intensive Reaktion, z.B. hoher Stoffaustausch, insbesondere zwischen Feststoffen und Flüssigkeiten im Gegenstrom erreicht wird.

Diese Aufgabe wird erfindungsgemäß dadurch gelöst, daß jeder Schneckengang aus zwei hintereinander angeordneten Schraubenblättern ausgebildet ist, wobei das eine Schraubenblatt im wesentlichen den ganzen Durchmesser der Trommel ausfüllt und beliebig viele Unterbrechungen - erzielt durch Lücken oder Schlitze oder durch versetzt angeordnete Blattelemente - aufweist, während das andere in Richtung des Feststofftransportes gesehene nachfolgende Schraubenblatt einen im Vergleich zum ersten Schraubenblatt größeren Abstand von der Trommelinnenwand aufweist und durchgehend ausgebildet ist, aber auch unterbrochen sein kann oder dadurch verwirklicht wird, daß die versetzt angeordneten Blattelemente im Falle des dadurch verwirklichten ersten Schraubenblattes etwa um die doppelte Länge verlängert ausgebildet sind mit jeweils einem Schraubenblatteil, das einen größeren Abstand zur Trommelinnenwand aufweist.

Dadurch wird erreicht, daß beim Betrieb des Reaktors die sedimentierten Feststoffe aufgrund einer Differenzgeschwindigkeit zwischen Trommel und Schnecke von dem ersten Schraubenblatt gesammelt, umgelagert und jeweils bis zu einer Unterbrechung gefördert und von dem zweiten Schraubenblatt die vom ersten Schraubenblatt auf der Trommelinnenwand in Bahnen abgelegten Feststoffe wieder gleichmäßig in Förderrichtung verstrichen werden.

Auf diese Weise wird die Oberfläche des Feststoffes während seines Transportes durch den Reaktor ständig und wiederholend erneuert und dadurch die beabsichtigten Reaktionen, z.B. Stoffaustausch zwischen Flüssigkeit und Feststoff intensiviert.

Durch Aufgabe der Flüssigkeit auf der der Aufgabe des Feststoffes gegenüberliegenden Seite der Trommel und durch Anordnung eines Wehres für den Flüssigkeitsaustrag und Ausbildung der des Feststoffaustrages gegenüberliegende Seite der Trommel in konischer Form bis zum Feststoffaustrag wird der Gegenstrom erzielt.

Die geometrischen Abmessungen wie z.B. der Abstand des Schraubenblattes zum Verstreichen des Feststoffes zur Trommel, der Abstand zwischen den Schraubenblättern oder die Größe der Lücken und Schlitze sowie Drehzahl der Trommel und Schnecke und die Differenzgeschwindigkeit zwischen beiden, Gangzahl usw. werden von dem Massendurchsatz, den Stoffeigenschaften und von dem zu erzielenden Ergebnis bestimmt.

Um einen möglichst großen Teil der Reaktorlänge als Gegenstromzone zu verwirklichen, ist es vorteilhaft, den Feststoffeintrag und den Flüssigkeitseintrag weit entfernt voneinander anzuordnen.

Das ist nur möglich, wenn der Feststoffeintrag sehr schonend vorgenommen wird, um eine Trübung, d.h. Suspendierung von Feststoffteilchen bei dem Auftreffen auf und Durchdringen durch die von der Einstellhöhe des Wehres abhängige Flüssigkeitsschicht zu vermeiden, da in einem solchen Falle die Beseitigung der Trübung eine mehr oder weniger große Klärzone zwischen Feststoffeintrag und Flüssigkeitsaustrag erfordert und diese Klärzone bei vorgegebener Gesamtlänge des Apparates zu Lasten der Ausbildung der Gegenstromzone geht.

Deshalb ist es vorteilhaft, die Eintragsöffnungen durch die Schneckenrohrwelle für den Feststoff mit Leiteinrichtungen, z.B. Rohrenden bis in die Nähe der Trommelwand zu versehen.

Dadurch wird erreicht, daß der Feststoff maximal bis nahe an die Umfangsgeschwindigkeit der Trommelwand beschleunigt wird, so daß die Relativgeschwindigkeit zwischen Flüssigkeit und zugeführten Feststoffen sich annähern und dadurch der Abrieb von Feststoffteilchen vermieden wird.

Die Funktionsweise des Reaktors ist folgende (zum leichtern Verständnis sind die zu den Figuren gehörenden Bezugsziffern in Klammern angegeben):
Die Feststoffe werden durch den, z.B. als feststehendes Einlaufrohr für noch pumpfähige feuchte Feststoffe, ausgebildeten Feststoffeinlaß in das Innere der Schnecke gefördert und durch Leiteinrichtungen (24) zu den Öffnungen (13) in die Schneckenrohrwelle geleitet und dabei beschleunigt.

Die Beschleunigung des Feststoffes wird durch die Rohrenden (23), die bis in die Nähe der Trommelwand reichen, fortgesetzt und der Feststoff gelangt auf die Trommelwand, wo er von den Schneckenflanken erfaßt und zum anderen Ende des Reaktors bis zum Feststoffaustrag (16) transportiert wird.

Für nicht mehr pumpfähige, d.h. z.B. für trockene feinzerteilte Feststoffe ist es jedoch auch möglich, durch das feststehende Einlaufrohr (5) die Feststoffe, z.B. mittels Förderschnecke, einzutragen.

Durch eine zweite Leitung (8), die beispielsweise durch das Feststoffeintragsrohr geführt werden kann, wenn der Reaktor nur von einer Seite her zugänglich ist, wird die Flüssigkeit getrennt vom Feststoff durch das Innere der Schnecke über Öffnungen am anderen Ende der Trommel aufgegeben und fließt in den Schneckengängen über und im Gegenstrom zum Feststoff zum Flüssigkeitsablauf.

Die Höhe des dabei sich ausbildenden Flüssigkeitsringes (26) auf der Innenwand der Trommel wird durch die Höhe eines Wehres (21) am Flüssigkeitsablauf bestimmt.

Ein im Inneren der Schnecke befindliches Wehr (10) trennt den Feststoff- und Flüssigkeitseintrag. Die Flüssigkeit kann nur über die den Feststoffeinlauf entgegengesetzt befindlichen Öffnungen (13), bereits beschleunigt, in die Trommel gelangen.

Befinden sich Öffnungen im konischen Teil der Schneckenrohrwelle (11), so bildet sich ein der Lage dieser Öffnungen entsprechender Flüssigkeitsring (25) im Inneren der Schnecke aus.

Der erfindungsgemäße Reaktor eignet sich für alle denkbaren Feststoff-Flüssigkeits-Reaktionen, z.B. physikalisch oder chemisch wirkende Wäschen.

Besonders gut geeignet ist der Reaktor zur Gegenstromwäsche von feinzerteilten feuchten Feststoffen, insbesondere Klärschlamm, mit einem hydrophilen Lösungsmittel. Dabei wird der mechanisch vorentwässerte Klärschlamm im Gegenstrom zum Lösungsmittel geführt, das z.B. Aceton, Ethanol oder Methanol sein kann. Die Wasserfeuchte des Schlammes wird durch die Feuchte des Lösungsmittels ausgetauscht, die eine wesentlich geringere Verdampfungswärme aufweist und sich anschließend wesentlich leichter als Wasser abpressen läßt.

Während sich der Schlamm mit dem Lösungsmittel belädt, nimmt der Flüssigstrom das abgestreifte Wasser auf. Das entstehende Lösungsmittel-Wasser-Gemisch wird einer Destillationskolonne zugeführt, wo das Lösungsmittel zurückgewonnen wird. Der lösungsmittelfeuchte Schlamm wird abgepreßt und gelangt in einen Verdampfer, wo die restliche Lösungsmittelfeuchte ausdampft.

Die Wirtschaftlichkeit der Gegenstromwäsche hängt wesentlich von der Effizienz des Waschprozesses, also des Stoffaustausches zwischen den Feststoffen und dem Lösungsmittel, ab. Ist die Wäsche uneffektiv, so enthält der Lösungsmittel-Wasser-Gemisch-Strom noch große Mengen an Lösungsmittel, was die Rückgewinnung des Lösungsmittels in der Destillationskolonne energie- und investitionsaufwendig macht.

Mit der vorliegenden Erfindung wurde nun ein Reaktor zur Gegensstromwäsche gefunden, mit dem die Effizienz der Wäsche entscheidend verbessert werden kann.

Alternativ zu dieser stufenlosen Gegenstromwäsche kann eine mehrstufige Misch- und Trennoperationen umfassende Einrichtung, eine sogenannte Mixer-Settler-Anlage, angesehen werden, die jedoch aufwendiger ist.

Im folgenden soll die Erfindung anhand eines in den Figuren schematisch dargestellten Ausführungsbeispieles näher erläutert werden.

Es zeigen:
- Figur 1:: einen Längsschnitt durch den Reaktor
- Figuren 2-5:: Ausschnitte aus einer Schnecke mit unterschiedlichen Ausführungsformen der Schraubenblätter

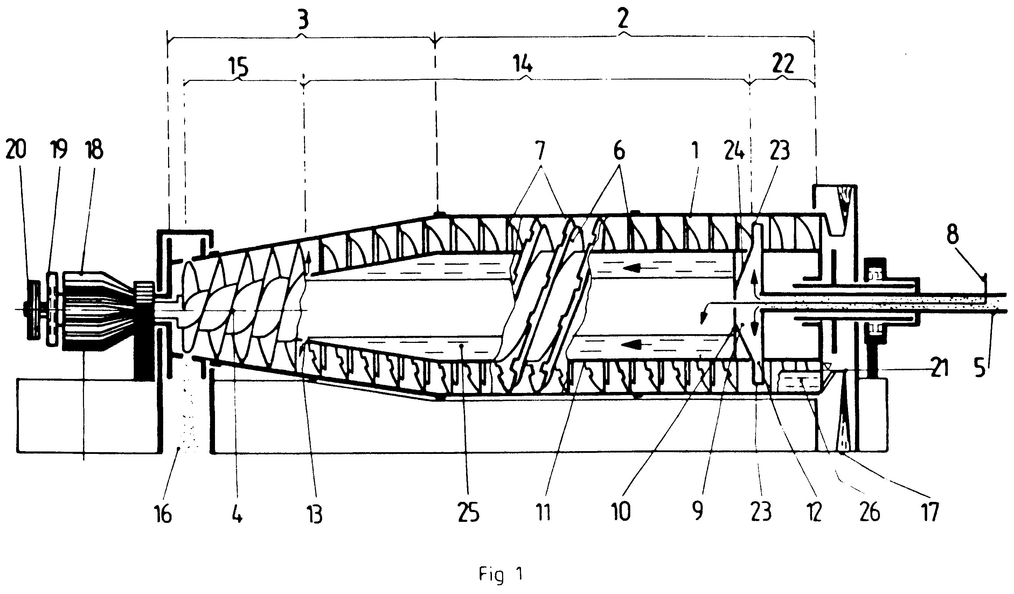

Der in Figur 1 dargestellte Reaktor besteht aus einer Trommel 1, die einen zylinderförmigen Abschnitt 2 und einen kegelstumpfförmigen Abschnitt 3 aufweist. In der Trommel 1 ist eine zweigängige Schnecke 4 axial zur Trommel 1 angeordnet.

Am zylinderseitigen Ende der Trommel 1 ist ein Eintragsrohr 5 für die Zufuhr der Feststoffe angebracht. Durch das Eintragsrohr 5 ist eine zweite Leitung 8 für die Flüssigkeitszugabe geführt. Während das Eintragsrohr 5 in einer Schleusenkammer9 im zylindrischen Teil 2 der Trommel 1 endet, ist die Leitung 8 durch ein die Schleusenkammer 9 begrenzendes Wehr 10 hindurchgeführt. Die in die Schleusenkammer 9 gelangten Feststoffe können über eine Leiteinrichtung 24 und Bohrungen 12 in der Schneckenrohrwelle 11 und Rohrenden 23 in die zylinderseitigen Schneckengänge übertreten.

Dabei wird der Feststoff durch die Leiteinrichtung 24 und die Rohrenden 23 auf nahezu Trommelumfangsgeschwindigkeit beschleunigt. Die Flüssigkeit gelangt dagegen durch die im kegelstumpfförmigen Teil 3 der Schneckenrohrwelle 11 befindlichen Bohrungen 13 in die kegelstumpfförmigen Schneckengänge. Der Bereich zwischen den Bohrungen 12 und den Bohrungen 13 bildet die Gegenstromzone 14, in der sich Flüssigkeit und Feststoffe im Gegenstrom zueinander bewegen.

Über die Länge der Gegenstromzone 14 ist die zweigängige Schnecke erfindungsgemäß ausgebildet: Während das erste Schraubenblatt 7 der zweigängigen Schnecke 4 im wesentlichen den ganzen Durchmesser der Trommel 1 ausfüllt und im Mantelbereich der Trommel 1 stufenförmig unterbrochen ist, weist das zweite Schraubenblatt 6 einen im Vergleich zum ersten Schraubenblatt 7 größeren Abstand zum Trommelmantel auf und ist durchgehend ausgebildet.

Am kegelstumpfseitigen Ende schließt sich an die Gegenstromzone 14 eine Trockenzone 15 an, in der die festen Reaktionsprodukte zum kegelstumpfseitigen Trommelende aus der Flüssigkeitsschicht heraus gefördert und über einen Feststoffaustragsschacht 16 ausgetragen werden.

Am zylindrischen Seitenende ist ein Wehr 21 angeordnet, über das die flüssigen Reaktionsprodukte ablaufen und über den Flüssigkeitsablauf 17 abgezogen werden. Dabei bestimmt die Höhe des Wehres 21 die Höhe des in der Figur 1 nicht durchgängig zeichnerisch dargestellten Flüssigkeitsringes 26.

Die Trommel 1 und die Schnecke 4 werden über ein außerhalb der Trommel 1 angeordnetes Getriebe 18, das über zwei Scheibenräder 19 und 20 mit einem nicht dargestellten Motor angetrieben wird, derart in Rotation versetzt, daß auf Flüssigkeit und Feststoff das Vielfache der Erdbeschleunigung wirkt, wobei durch Antrieb und Getriebe eine einstellbare Differenzgeschwindigkeit zwischen Schnecke 4 und Trommel 1 verwirklicht wird, so daß die Schnecke in Richtung des Feststoffaustrages 16 gesehen und bei der in Figur 1 dargestellten Steigung der Schraubenblätter sich in Uhrzeigerrichtung gegenüber der Trommel dreht.

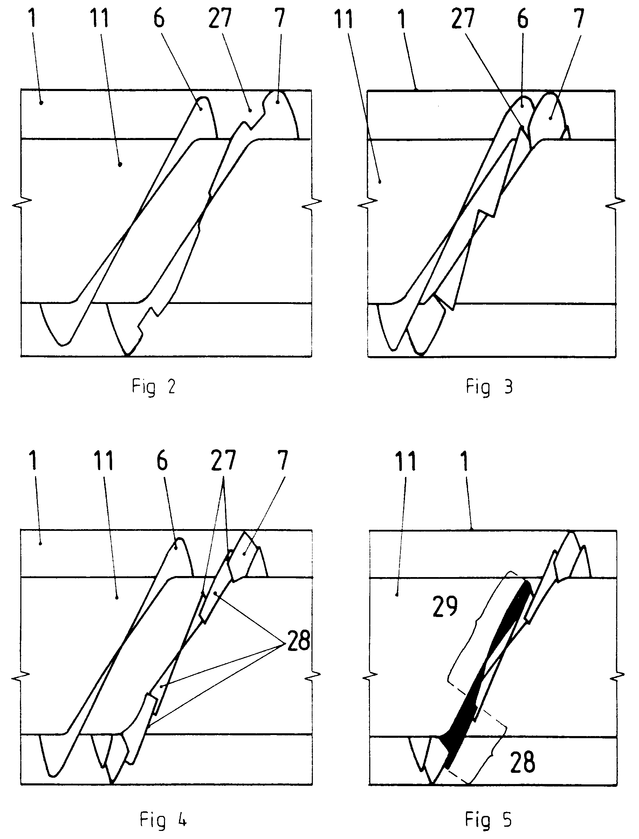

Die Figuren 2 bis 5 zeigen Ausschnitte einer Schnecke 4 mit verschiedenen Ausführungsformen der Schraubenblätter ohne dabei weitere Ausführungsformen auszuschließen. Die Darstellungen bei allen Figuren 2 bis 5 gehen davon aus, daß hierbei der Feststofftransport von links nach rechts erfolgt und die Differenzdrehrichtung der Schnecke 4 zur Trommel 1 in der Draufsicht von links gesehen im Uhrzeigersinn verläuft.

Das Schraubenblatt 6 bei den Figuren 2 bis 4 ist durchgehend ausgebildet und hat einen kleineren Durchmesser als die Trommel 1. Das Schraubenblatt 7 bei den Figuren 2 bis 4 weist zahlreiche Unterbrechungen auf und hat einen Durchmesser, der dem der Trommel nahezu entspricht.

Die Unterbrechungen am Schraubenblatt 7 bei Figur 2 werden durch rechteckige Lücken im Flankenbereich gebildet, wobei auch andere geometrische Formen in Frage kommen, während bei Figur 3 diese durch Schlitze erfolgen, die z.B. durch Trennen des Schraubenblattes in radialer Richtung und Verwinden der entstandenen Blattabschnitte hergestellt werden können.

Das Schraubenblatt 7 bei Figur 4 ist durch versetzt angeordnete Blattelemente 28 ausgebildet, so daß die Lücken 27 durch die Abstände dieser Blattelemente entstehen, wobei die Blattelemente 28 soweit überlappt sind, daß deren Flanken, im Gegensatz zu den Ausführungen in Figur 2 und 3, die gesamte Trommelmantelinnenfläche bei der Drehung der Schnecke überstreichen.

Die Figur 5 zeigt schließlich die erfindungsgemäße Ausführungsform, bei dem ein Schneckengang dadurch ausgebildet ist, daß die versetzt angeordneten Blattelemente 28 des Schraubenblattes 7 gemäß der Figur 4 jeweils durch Blattelemente 29 gleicher Länge mit kleinerem Durchmesser verlängert ausgebildet sind, wobei diese Verlängerungen die Funktion des Verstreichens der Feststoffe übernehmen, so daß das Schraubenblatt 6 gemäß Figur 4 entfällt. In Figur 5 ist diese Ausführungsform nur an einem Blattelement 28, 29 zeichnerisch dargestellt.

Im vorliegenden Ausführungsbeispiel soll der Reaktor zur Entwässerung von Klärschlamm mittels Gegenstromwäsche mit Aceton eingesetzt werden. Dabei ist die Funktionsweise des Reaktors folgendermaßen:
Der noch pumpfähige, aber bereits auf 25% Trockensubstanz entwässerte, Schlamm wird durch das Feststoffeintragsrohr 5 in das Innere der Schneckenrohrwelle 11 und durch die Öffnungen 12 und den Rohrenden 23 auf die Innenwand der Trommel 1 des zylindrischen Seitenendes gefördert. Dort wird er von den Schneckenflanken erfaßt und zum anderen Ende des Reaktors bis zum Feststoffaustrag 16 transportiert.

Dabei wird in der Gegenstromzone der Schlamm von dem ersten Schraubenblatt 7 gesammelt, umgelagert und jeweils bis zu einer Lücke gefördert und in Bahnen abgelegt und von dem dahinter angeordneten Schraubenblatt 6 erfaßt und auf der Trommelwand gleichmäßig verstrichen.

Je höher die Differenzdrehzahl zwischen Schnecke 4 und Trommel 1 und je höher die Gangzahl der Schnecke ist, um so häufiger wird die Feststoffoberfläche auf der Trommelwand erneuert.

Durch die zweite Leitung 8, die durch das Feststoffeintragsrohr 5 geführt wird (der Reaktor ist nur von einer Seite her zugänglich) wird Aceton getrennt vom Klärschlamm durch das Innere der Schneckenrohrwelle über die Öffnungen 13 am anderen Ende der Trommel aufgegeben. Das Aceton fließt in den Schneckengängen über und im Gegenstrom zum Klärschlamm zum Flüssigkeitsablauf 17.

Das im Inneren der Schnecke befindliche Wehr 10 trennt den Klärschlamm- und Acetoneintrag. Das Aceton bildet in der Schnecke 4 einen Flüssigkeitsring 25 und kann nur über die den Feststoffeinlauf 5 entgegengesetzt befindlichen Öffnungen 13, bereits beschleunigt, in die Trommel gelangen.

Während der Schlamm Wasser an das Aceton abgibt und Aceton aufnimmt, wird aus der ursprünglich acetonreichen eine wasserreiche Flüssigkeit. Zusätzlich werden vorhandene Fette, Öle und ggf. unerwünschte Schadstoffe aus dem Klärschlamm herausgelöst, die bei der destillativen Rückgewinnung des Acetons getrennt erhalten werden können.

Die Aufgabe des Reaktors besteht hier nicht darin, wie bei den üblichen Dekantern eine Flüssig-Fest-Trennung vorzunehmen, sondern einen bereits entwässerten Dickstoff im sedimentierten Zustand zu halten und ihn im Gegenstrom zum zugeführten Aceton zu bewegen und dabei einen hohen Stoffaustausch zu gewährleisten.

## Patentansprüche

1. Reaktor zur Gegenstrombehandlung von Feststoffen und Flüssigkeiten im Zentrifugalkraftfeld einer rotierenden Trommel, die ein Einlaßrohr für den Feststoffeintrag aufweist, wobei der Feststoff im sedimentierten Zustand auf der Innenwand der Trommel im Gegenstrom zur Flüssigkeit durch eine mit gegenüber der Trommel geringfügig differierender Geschwindigkeit mitrotierende aus Schneckenrohrwelle und Schraubenblättern bestehende ein- oder mehrgängigen Schnecke gefördert wird, **dadurch gekennzeichnet, daß** jeder Schneckengang
a) entweder aus zwei hintereinander angeordneten Schraubenblättern (6, 7) ausgebildet ist, wobei das eine Schraubenblatt (7) im wesentlichen den ganzen Durchmesser der Trommel (1) ausfüllt und beliebig viele Unterbrechungen - erzielt durch Lücken (27) oder Schlitze (27) oder durch versetzt angeordnete Blattelemente (28) - aufweist, während das andere in Richtung des Feststofftransportes gesehene nachfolgende Schraubenblatt (6) einen im Vergleich zum ersten Schraubenblatt (7) größeren Abstand von der Trommelinnenwand aufweist und durchgehend ausgebildet ist, aber auch unterbrochen sein kann,
b) oder dadurch verwirklicht wird, daß die versetzt angeordneten Blattelemente (28) im Falle des dadurch verwirklichten ersten Schraubenblattes etwa um die doppelte Länge verlängert ausgebildet sind mit jeweils einem Schraubenblatteil (29), das einen größeren Abstand zur Trommelinnenwand aufweist.

2. Reaktor nach Anspruch 1, dadurch gekennzeichnet, daß das Einlaßrohr (5) in das Innere der Schneckenrohrwelle (11) hineinragt, welche Öffnungen (12) aufweist, zu denen Leiteinrichtungen (24) führen und, daß an den Öffnungen (12) sich weitere Leiteinrichtungen 823) außerhalb der Schneckenrohrwelle (11), vorteilhafterweise Rohre, angebracht sind, die bis nahe an die Trommelinnenwand (1) reichen.
